(19) **Europäisches Patentamt**
**European Patent Office**
**Office européen des brevets**

(11) **EP 3 958 147 A1**

(12) **EUROPEAN PATENT APPLICATION**
published in accordance with Art. 153(4) EPC

(43) Date of publication:
**23.02.2022 Bulletin 2022/08**

(21) Application number: **19925106.7**

(22) Date of filing: **19.04.2019**

(51) International Patent Classification (IPC):
***G06F 16/383*** (2019.01)

(52) Cooperative Patent Classification (CPC):
**G06F 16/383**

(86) International application number:
**PCT/JP2019/016847**

(87) International publication number:
**WO 2020/213158 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
- **KATAOKA, Masahiro**
  **Kawasaki-shi, Kanagawa 211-8588 (JP)**
- **ONOUE, Satoshi**
  **Kawasaki-shi, Kanagawa 211-8588 (JP)**
- **KATO, Sho**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **IDENTIFICATION METHOD, GENERATION METHOD, DIMENSIONALITY REDUCTION METHOD, DISPLAY METHOD, AND INFORMATION PROCESSING DEVICE**

(57) An information processing device identifies a vector corresponding to any word included in text included in a search condition. The information processing device refers to a storage unit that stores presence information indicating whether or not a word corresponding to each of a plurality of vectors is included in each of a plurality of text files, and identifies a text file including the any word among the plurality of text files on the basis of presence information associated with a vector in which similarity to the identified vector is equal to or higher than a standard among the plurality of vectors.

FIG. 2

**Description**

TECHNICAL FIELD

The present invention relates to an identification method and the like.

BACKGROUND ART

In a conventional search technique and the like, in the case of compressing and encoding text such as a specialized book, the text is subject to lexical analysis to generate an inverted index in which a word is associated with an offset of the word in the text, which is used for text search. For example, when a search query (text to be searched) is specified, an offset corresponding to a word of the search query is identified using the inverted index, and searches for text including the word of the search query.

SUMMARY OF INVENTION

[TECHNICAL PROBLEM]

However, according to the conventional technique mentioned above, a search may not be performed in text of a specialized book or the like, and text of a search query due to a variation in the particle size of a word or sentence.
For example, since the inverted index described above associates a word with its offset, it is difficult to search for a word that does not match the word of the search query even if the meaning is the same.
In one aspect, an object of the present invention is to provide an identification method, a generation method, a dimensional compression method, a display method, and an information processing device that suppress a decrease in search accuracy due to a notational variation from text of a search query.

[SOLUTION TO PROBLEM]

In a first plan, a computer performs the following process. The computer receives text included in a search condition. The computer identifies a vector corresponding to any word included in the received text. The computer refers to, in association with each of a plurality of vectors corresponding to a plurality of words included in at least one of a plurality of text files, a storage unit that stores presence information indicating whether or not a word corresponding to each of a plurality of vectors is included in each of a plurality of text files, and identifies a text file including the any word among the plurality of text files on the basis of presence information associated with a vector in which similarity to the identified vector is equal to or higher than a standard among the plurality of vectors.

[ADVANTAGEOUS EFFECTS OF INVENTION]

It becomes possible to suppress a decrease in search accuracy due to a notational variation from text of a search query.

BRIEF DESCRIPTION OF DRAWINGS

FIG. 1 is a diagram (1) for explaining processing of an information processing device according to the present embodiment;
FIG. 2 is a diagram (2) for explaining processing of the information processing device according to the present embodiment;
FIG. 3 is a functional block diagram illustrating a configuration of the information processing device according to the present embodiment;
FIG. 4 is a diagram illustrating an exemplary data structure of a word vector table;
FIG. 5 is a diagram illustrating an exemplary data structure of a dimensional compression table;
FIG. 6 is a diagram illustrating an exemplary data structure of a word index;
FIG. 7 is a diagram illustrating an exemplary data structure of a synonym index;
FIG. 8 is a diagram illustrating an exemplary data structure of a synonymous sentence index;
FIG. 9A is a diagram for explaining a distributed arrangement of basis vectors;
FIG. 9B is a diagram for explaining dimensional compression;

FIG. 10 is a diagram for explaining an exemplary process of hashing an inverted index;

FIG. 11 is a diagram for explaining dimensional restoration;

FIG. 12 is a diagram for explaining a process of restoring a hashed bitmap;

FIG. 13 is a diagram illustrating exemplary graph information;

FIG. 14 is a flowchart (1) illustrating a processing procedure of the information processing device according to the present embodiment;

FIG. 15 is a flowchart (2) illustrating a processing procedure of the information processing device according to the present embodiment;

FIG. 16 is a diagram illustrating an example of a plurality of synonym indexes generated by a generation processing unit; and

FIG. 17 is a diagram illustrating an exemplary hardware configuration of a computer that implements functions similar to the information processing device according to the present embodiment.

DESCRIPTION OF EMBODIMENTS

Hereinafter, an embodiment of an identification method, a generation method, a dimensional compression method, a display method, and an information processing device disclosed in the present application will be described in detail with reference to the drawings. Note that the present embodiment does not limit the present invention.

[Embodiment]

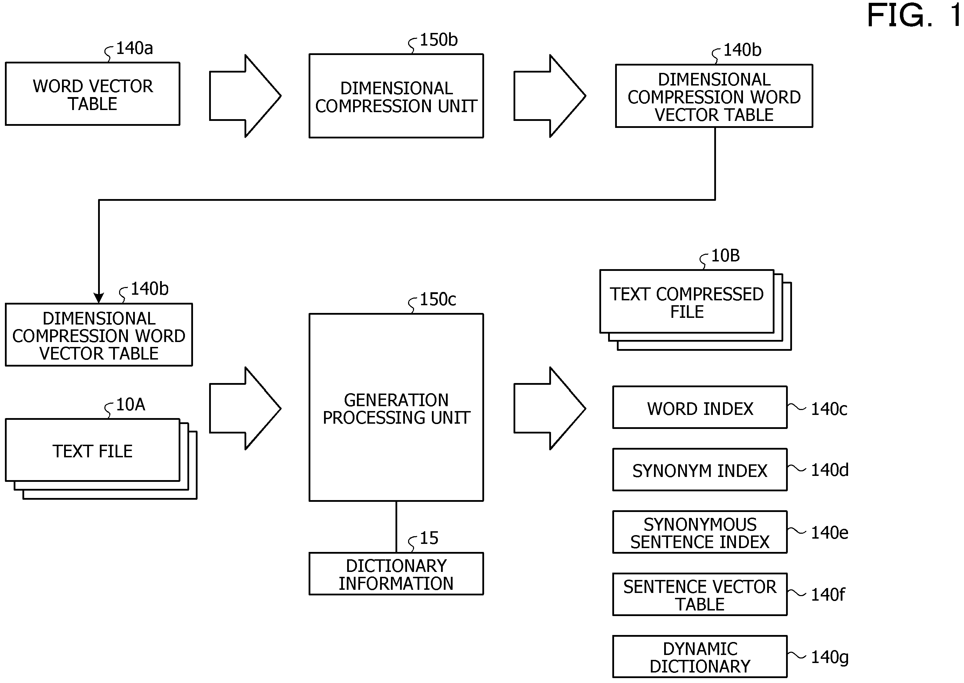

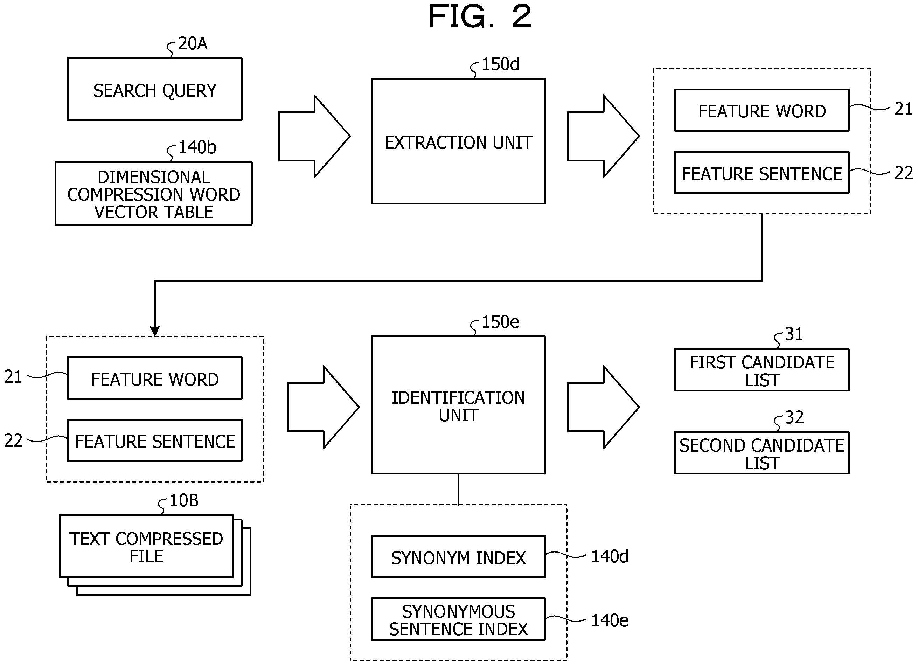

FIGs. 1 and 2 are diagrams for explaining processing of an information processing device according to the present embodiment. First, FIG. 1 will be described. As illustrated in FIG. 1, a dimensional compression unit 150b of the information processing device obtains a word vector table 140a. The word vector table 140a is a table that retains information associated with a vector of each word. The vector of each word included in the word vector table 140a is a vector calculated in advance using Word2Vec or the like, which is, for example, a 200-dimensional vector.

The dimensional compression unit 150b dimensionally compresses the vector of each word of the word vector table 140a, thereby generating a dimensional compression word vector table 140b. The dimensional compression word vector table 140b is a table that retains information associated with the dimensionally compressed vector of each word. The vector of each word included in the dimensional compression word vector table 140b is a three-dimensional vector.

The dimensional compression unit 150b evenly distributes and arranges, in a circle, respective 200 vectors $a_i e_i$ (i = 1 to 200), which are component-decomposed into 200 dimensions. Here, "$e_i$" represents a basis vector. In the following descriptions, the component-decomposed vector is referred to as a basis vector. The dimensional compression unit 150b selects one basis vector of a prime number, and integrates a value obtained by orthogonally transforming basis vectors of other dimensions into the basis vector. The dimensional compression unit 150b performs the processing described above on the basis vectors of three prime numbers divided by the prime number "3" and distributed, thereby dimensionally compressing a 200-dimensional vector into a three-dimensional vector. For example, the dimensional compression unit 150b calculates each of basis vector values of the number "1" and the prime numbers "67" and "131", thereby performing dimensional compression into a three-dimensional vector.

Note that, although a three-dimensional vector is described as an example in the present embodiment, it may be a vector of another dimension. By selecting the basis vectors of the prime numbers divided by the prime numbers "3 or more" and distributed, it becomes possible to achieve highly accurate dimensional restoration, although it is irreversible. Note that, while the accuracy is improved as the prime number to be divided increases, the compression rate decreases. In the following descriptions, a 200-dimensional vector is referred to as a "vector", and a three-dimensionally compressed vector is referred to as a "compression vector", as appropriate.

A generation processing unit 150c of the information processing device receives a plurality of text files 10A. The text file 10A is a file having a plurality of sentences composed of a plurality of words. The generation processing unit 150c encodes, on the basis of dictionary information 15, each of the plurality of text files 10A in word units, thereby generating a plurality of text compressed files 10B.

The generation processing unit 150c generates a word index 140c, a synonym index 140d, a synonymous sentence index 140e, a sentence vector 140f, and a dynamic dictionary 140g at the time of generating the text compressed file 10B on the basis of the text file 10A.

The dictionary information 15 is information (static dictionary) that associates a word with a code. The generation processing unit 150c refers to the dictionary information 15, assigns each word of the text file 10A to a code, and compresses it. The generation processing unit 150c compresses, among the words of the text file 10A, words that do not exist in the dictionary information 15 and infrequent words while assigning dynamic codes thereto, and registers such words and the dynamic codes in the dynamic dictionary 140g.

The word index 140c associates a code (or word ID) of a word with a position of the code of the word. The position of the code of the word is indicated by an offset of the text compressed file 10B. The offset may be defined in any way in a plurality of the text compressed files 10B. For example, if the offset of the code of the last word of the previous text compressed file is "N", the offset of the code of the beginning word of the next text compressed file may be continuous to be "N + 1".

The synonym index 140d associates a compressed vector of a word with the position of the code of the word corresponding to the compressed vector. The position of the code of the word is indicated by an offset of the text compressed file 10B. Here, the same compressed vector is assigned to a word that is a synonym even if it has a code of a different word. For example, in a case where words $A_1$, $A_2$, and $A_3$ are synonyms such as "ringo" (Japanese), "apple" (English), and "pomme" (French), compressed vectors of the words $A_1$, $A_2$, and $A_3$ have values that are substantially the same.

The synonymous sentence index 140e associates a compressed vector of a sentence with the position of the sentence corresponding to the compressed vector. A position of a sentence of the text compressed file 10B is assumed to be the position of the code of the beginning word among the codes of the words included in the sentence. The generation processing unit 150c integrates the compressed vector of each word included in the sentence to calculate a compressed vector of the sentence, and stores it in the sentence vector table 140f. The generation processing unit 150c calculates similarity of the compressed vector of each sentence included in the text file 10A, respectively, and classifies a plurality of sentences with the similarity equal to or higher than a threshold value into the same group. The generation processing unit 150c identifies each sentence belonging to the same group as a synonymous sentence, and assigns the same compressed vector. Note that a three-dimensional compressed vector is assigned to each sentence as a sentence vector. Furthermore, it is also possible to distribute and arrange each sentence vector in association with a circle in the order of appearance, and to compress a plurality of sentences at once.

As described above, the information processing device according to the present embodiment generates the dimensional compression word vector table 140b obtained by dimensionally compressing the word vector table 140a, and in the case of compressing the text file 10A, generates a compressed vector and the synonym index 140d and the synonymous sentence index 140e defining the appearance position of the synonym and the synonymous sentence corresponding to the compressed vector. The synonym index 140d is information that assigns the same compressed vector to each word belonging to the same synonym and defines a position at which the word (synonym) corresponding to the compressed vector appears. Furthermore, the synonymous sentence index 140e is information that assigns the same compressed vector to each sentence belonging to the same synonymous sentence and defines a position at which the sentence (synonymous sentence) corresponding to the compressed vector appears. Therefore, it becomes possible to reduce data volume as compared with a method of assigning a 200-dimensional vector to each word or sentence.

Description of FIG. 2 will be made. Upon reception of a search query 20A, an extraction unit 150d of the information processing device extracts a feature word 21 and a feature sentence 22 on the basis of the dimensional compression word vector table 140b.

For example, the extraction unit 150d calculates compressed vectors of a plurality of sentences included in the search query 20A. First, the extraction unit 150d obtains, from the dimensional compression word vector table 140b, compressed vectors of a plurality of words included in one sentence, and restores the obtained compressed vectors of the words to 200-dimensional vectors.

The extraction unit 150d evenly distributes and arranges, in a circle, respective basis vectors component-decomposed into 200 dimensions. The extraction unit 150d selects one basis vector other than the basis vectors of the number "1" and the two prime numbers "67" and "131" divided by the prime number "3" selected by the dimensional compression unit 150b, and integrates values obtained by orthogonally transforming the basis vectors of the number "1" and the prime numbers "67" and "131" with respect to the selected basis vector, thereby calculating a value of the selected one basis vector. For example, the extraction unit 150d repeatedly performs the processing described above on each basis vector corresponding to "2 to 66, 68 to 130, and 132 to 200". By performing the processing described above, the extraction unit 150d restores the compressed vector of each word included in the search query 20A to 200-dimensional vectors.

Subsequently, the extraction unit 150d integrates vectors of a plurality of words included in one sentence, thereby calculating a vector of the sentence. The extraction unit 150d also similarly calculates a vector of a sentence for other sentences included in the search query 20A.

The extraction unit 150d integrates vectors of a plurality of sentences included in the search query 20A, thereby calculating a vector of the search query 20A. In the following descriptions, the vector (200 dimensions) of the search query 20A will be referred to as a "query vector".

The extraction unit 150d sorts values of respective dimensions of the query vector in descending order, and identifies the upper several dimensions. In the following descriptions, the upper several dimensions will be referred to as "feature dimensions". The extraction unit 150d extracts, as the feature sentence 22, a sentence containing a large number of vector values of the feature dimensions from among the plurality of sentences included in the search query 20A. Furthermore, the extraction unit 150d extracts, as the feature word 21, a word containing a large number of vector values of the feature dimensions from among a plurality of words included in the search query 20A.

An identification unit 150e compares a compressed vector of the feature word 21 with a compressed vector of the synonym index 140d to identify a compressed vector of the synonym index 140d having similarity to the compressed vector of the feature word 21 equal to or higher than a threshold value. The identification unit 150e searches the plurality of text compressed files 10B for the text compressed file corresponding to the feature word 21 on the basis of the offset corresponding to the identified compressed vector, and generates the searched text compressed file as a first candidate list 31.

The identification unit 150e compares a compressed vector of the feature sentence 22 with a compressed vector of the synonymous sentence index 140e to identify a compressed vector of the synonymous sentence index 140e having similarity to the compressed vector of the feature sentence 22 equal to or higher than the threshold value. The identification unit 150e searches the plurality of text compressed files 10B for the text compressed file corresponding to the feature sentence 22 on the basis of the offset corresponding to the identified compressed vector, and generates the searched text compressed file as a second candidate list 32.

As described above, in a case where the search query 20A is given, the information processing device identifies the feature dimensions of the search query 20A, and identifies the feature word 21 and the feature sentence 22 containing a large number of vector values of the feature dimensions. The information processing device generates the first candidate list 31 on the basis of the compressed vector of the feature word 21 and the synonym index 140d. The information processing device generates the second candidate list 32 on the basis of the compressed vector of the feature sentence 22 and the synonymous sentence index 140e. Since the compressed vectors to be used in the feature word 21, the feature sentence 22, the synonym index 140d, and the synonymous sentence index 140e are three-dimensional vectors, it becomes possible to detect the text compressed file containing words and sentences similar to the search query 20A while suppressing the cost of similarity calculation.

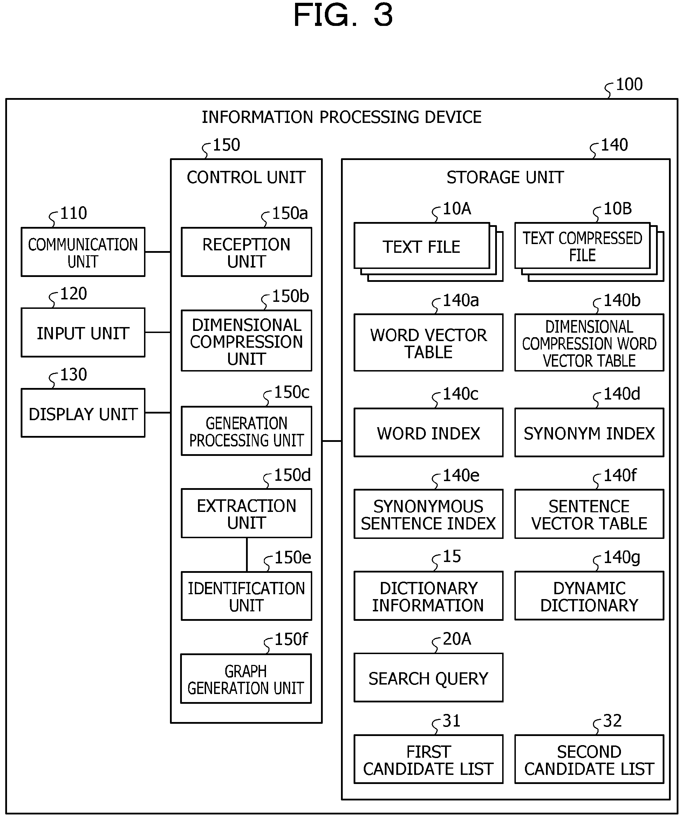

Next, an example of a configuration of the information processing device according to the present embodiment will be described. FIG. 3 is a functional block diagram illustrating the configuration of the information processing device according to the present embodiment. As illustrated in FIG. 3, an information processing device 100 includes a communication unit 110, an input unit 120, a display unit 130, a storage unit 140, and a control unit 150.

The communication unit 110 is a processing unit that executes data communication with an external device (not illustrated) via a network or the like. The communication unit 110 corresponds to a communication device. For example, the communication unit 110 may receive, from the external device, information such as the text file 10A, the dictionary information 15, and the search query 20A.

The input unit 120 is an input device for inputting various types of information to the information processing device 100. The input unit 120 corresponds to a keyboard, a mouse, a touch panel, and the like. For example, a user may operate the input unit 120 to input the search query 20A.

The display unit 130 is a display device that displays various types of information output from the control unit 150. The display unit 130 corresponds to a liquid crystal display, a touch panel, and the like. For example, the display unit 130 displays the first candidate list 31 and the second candidate list 32 specified by the identification unit 150e.

The storage unit 140 has the text file 10A, the text compressed file 10B, the word vector table 140a, the dimensional compression word vector table 140b, the word index 140c, the synonym index 140d, and the synonymous sentence index 140e. The storage unit 140 has the sentence vector table 140f, the dynamic dictionary 140g, the dictionary information 15, the search query 20A, the first candidate list 31, and the second candidate list 32. The storage unit 140 corresponds to a semiconductor memory element such as a random access memory (RAM), a read-only memory (ROM), or a flash memory, or a storage device such as a hard disk drive (HDD).

The text file 10A is information containing a plurality of sentences. A sentence is information containing a plurality of words. For example, sentences are separated by punctuation marks, periods, and the like. In the present embodiment, a plurality of the text files 10A is registered in the storage unit 140.

The text compressed file 10B is information obtained by compressing the text file 10A. For example, the text file 10A is compressed in word units on the basis of the dictionary information 15, thereby generating the text compressed file 10B.

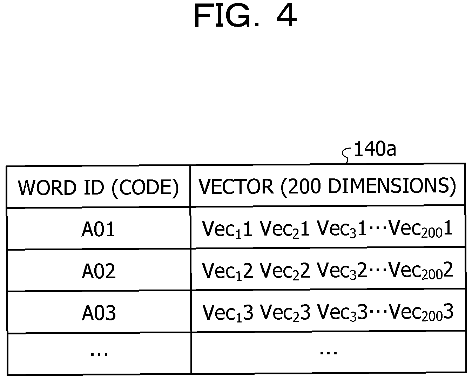

The word vector table 140a is a table that retains information associated with a vector of each word. FIG. 4 is a diagram illustrating an exemplary data structure of a word vector table. As illustrated in FIG. 4, the word vector table 140a associates word ID with a vector of the word. Word ID uniquely identifies a word. Note that a code of a word defined by the dictionary information 15 or the like may be used instead of word ID. The vector is a vector calculated in advance using Word2Vec or the like, which is, for example, a 200-dimensional vector.

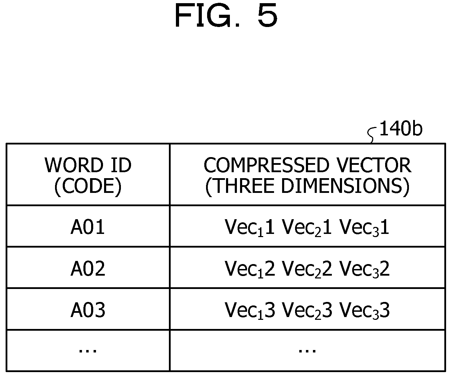

The dimensional compression word vector table 140b is a table that retains information associated with the compressed vector of each word, which has been dimensionally compressed. FIG. 5 is a diagram illustrating an exemplary data structure of a dimensional compression table. As illustrated in FIG. 5, the dimensional compression word vector table 140b associates word ID with a compressed vector of the word. Note that a code of a word may be used instead of word ID.

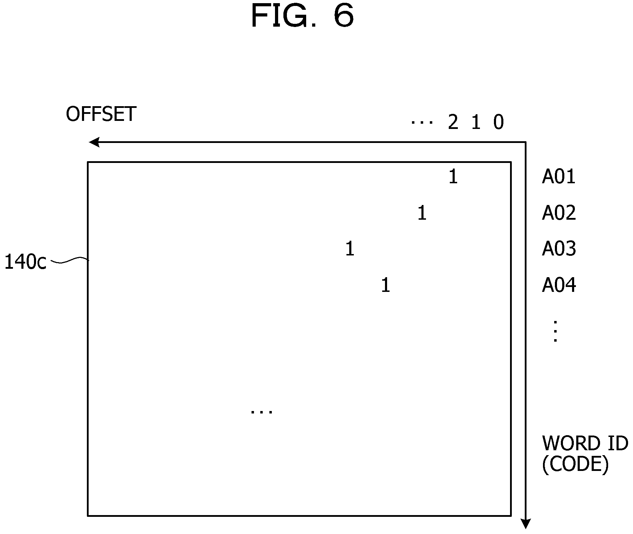

The word index 140c associates a code (or word ID) of a word with a position (offset) of the word ID. FIG. 6 is a diagram illustrating an exemplary data structure of a word index. In the word index 140c illustrated in FIG. 6, the horizontal axis represents the offset of the text compressed file 10B. The vertical axis corresponds to the word ID. For example, a flag "1" is set at a portion at the intersection of the row with the word ID "A01" and the column with the offset "2". Therefore, it is indicated that the code of the word of the word ID "A01" is located at the offset "2" of the text compressed file 10B.

The offset used in the present embodiment is an offset in the case of sequentially concatenating a plurality of the text compressed files 10B, which indicates an offset from the beginning text compressed file 10B. Although illustration is omitted, it is assumed that the offset to be a break between the text compressed files is set to the word index 140c. The offset of the synonym index 140d and the offset of the synonymous sentence index 140e to be described later are set in a similar manner.

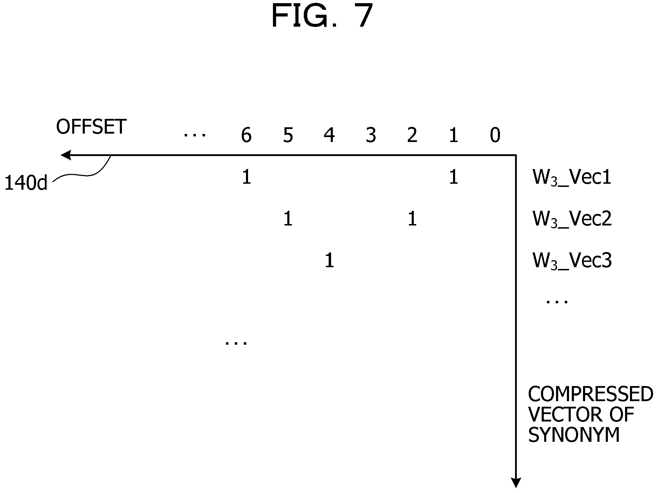

The synonym index 140d associates a compressed vector of a word with the position (offset) of the code of the word corresponding to the compressed vector. FIG. 7 is a diagram illustrating an exemplary data structure of a synonym index. In the synonym index 140d illustrated in FIG. 7, the horizontal axis represents the offset of the text compressed file 10B. The vertical axis corresponds to a compressed vector of a word. The same compressed vector is assigned to a plurality of words belonging to the same synonym. For example, flags "1" are set at the intersections of the row of the compressed vector "$W_3\_Vec1$" of the synonym and the offsets "1" and "6". Therefore, it is indicated that any code among the codes of the plurality of words belonging to the synonym of the compressed vector "$W_3\_Vec1$" is located at the offsets "1" and "6" of the text compressed file 10B. Note that the compressed vector has a certain particle size as each dimension of the compressed vector of the synonym is divided by a certain threshold value.

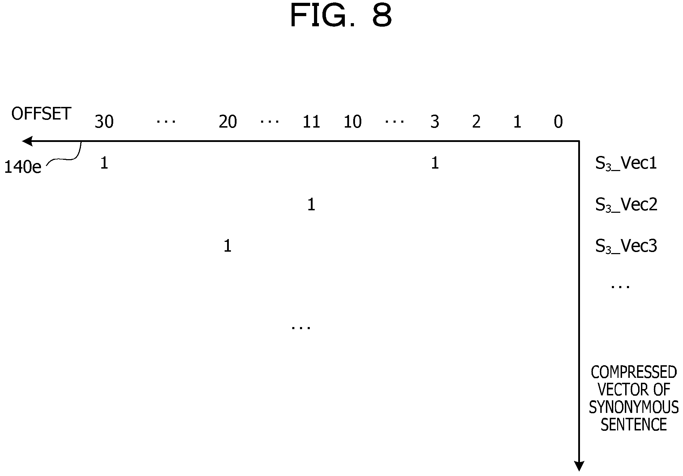

The synonymous sentence index 140e associates a compressed vector of a sentence with the position (offset) of the sentence corresponding to the compressed vector. A position of a sentence of the text compressed file 10B is assumed to be the position of the code of the beginning word among the codes of the words included in the sentence. FIG. 8 is a diagram illustrating an exemplary data structure of a synonymous sentence index. In the synonymous sentence index 140e illustrated in FIG. 8, the horizontal axis represents the offset of the text compressed file 10B. The vertical axis corresponds to a compressed vector of a sentence. The same compressed vector is assigned to a plurality of sentences belonging to the synonymous sentence having the same meaning. For example, flags "1" are set at the intersections of the row of the compressed vector "$S_3\_Vec1$" of the synonymous sentence and the offsets "3" and "30". Therefore, it is indicated that, among a plurality of sentences belonging to the synonymous sentence of the compressed vector "$S_3\_Vec1$", a code of a beginning word of any sentence is located at the offsets "3" and "30" of the text compressed file 10B. Note that the compressed vector has a certain particle size as each dimension of the compressed vector of the synonymous sentence is divided by a certain threshold value.

The sentence vector table 140f is a table that retains information associated with a compressed vector of a sentence. The dynamic dictionary 140g is information that dynamically associates a code with a word not registered in the dictionary information 15 or a low-frequency word that has appeared at the time of compression encoding. The dictionary information 15 is information (static dictionary) that associates a word with a code.

The search query 20A has information associated with a sentence to be searched. The search query 20A may be a text file having a plurality of sentences.

The first candidate list 31 is a list having the text compressed file 10B detected on the basis of the feature word 21 extracted using the search query 20A.

The second candidate list 32 is a list having the text compressed file 10B detected on the basis of the feature sentence 22 extracted using the search query 20A.

The description returns to FIG. 3. The control unit 150 includes a reception unit 150a, the dimensional compression unit 150b, the generation processing unit 150c, the extraction unit 150d, the identification unit 150e, and the graph generation unit 150f. The control unit 150 may be constructed by a central processing unit (CPU), a micro processing unit (MPU), or the like. Furthermore, the control unit 150 may also be implemented by hard wired logic such as an application specific integrated circuit (ASIC) and a field programmable gate array (FPGA).

The reception unit 150a is a processing unit that receives various types of information from the communication unit 110 or the input unit 120. When a plurality of the text files 10A is received, the reception unit 150a registers the plurality of text files 10A in the storage unit 140. When the search query 20A is received, the reception unit 150a registers the search query 20A in the storage unit 140.

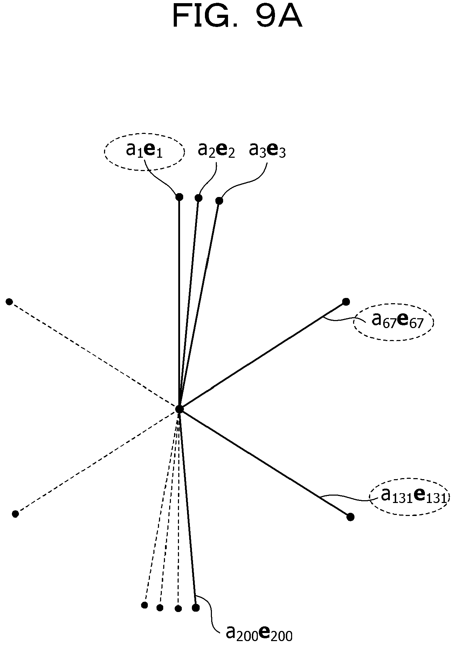

The dimensional compression unit 150b is a processing unit that dimensionally compresses the vector of each word of the word vector table 140a to generate the dimensional compression word vector table 140b. FIG. 9A is a diagram for explaining a distributed arrangement of basis vectors. First, the dimensional compression unit 150b evenly distributes and arranges, in a circle (semicircle), 200 basis vectors $a_i e_i$ ($i = 1$ to $200$), which are component-decomposed into 200 dimensions. Note that a relationship between a vector A before component decomposition and each component-decomposed basis vector $a_i e_i$ is defined by a formula (1).

$$A = \sum_{i=1}^{200} a_i e_i \qquad \cdots (1)$$

As illustrated in FIG. 9A, the dimensional compression unit 150b distributes and arranges positives (solid line + circular arrow) in the right semicircle and negatives (dotted line + circular arrow) in the left semicircle with respect to the 200 basis vectors $a_1 e_1$ to $a_{200} e_{200}$. It is assumed that that angles formed by the respective basis vectors are uniform. For example, the dimensional compression unit 150b selects basis vectors of prime numbers divided by the prime number "3" from the basis vectors $a_1 e_1$ to $a_{200} e_{200}$. In the present embodiment, the dimensional compression unit 150b selects a basis vector $a_1 e_1$, a basis vector $a_{67} e_{67}$, and a basis vector $a_{131} e_{131}$ as an example.

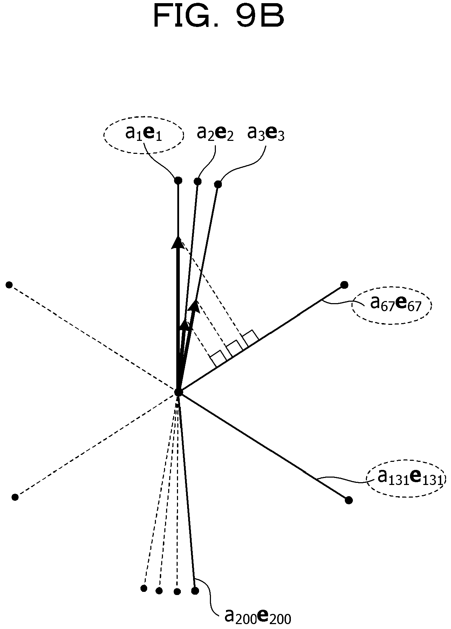

FIG. 9B is a diagram for explaining dimensional compression. First, the dimensional compression unit 150b orthogonally transforms the respective remaining basis vectors $a_2 e_2$ to $a_{200} e_{200}$ with respect to the basis vector $a_1 e_1$, and integrates the values of the respective orthogonally transformed basis vectors $a_2 e_2$ to $a_{200} e_{200}$, thereby calculating a value of the basis vector $a_1 e_1$.

As illustrated in FIG. 9B, the dimensional compression unit 150b orthogonally transforms the respective remaining basis vectors $a_1 e_1$ (solid line + arrow), $a_2 e_2$, $a_3 e_3$ to $a_{66} e_{66}$, and $a_{68} e_{68}$ to $a_{200} e_{200}$ with respect to the basis vector $a_{67} e_{67}$, and integrates the values of the respective orthogonally transformed basis vectors $a_1 e_1$ to $a_{66} e_{66}$ and $a_{68} e_{68}$ to $a_{200} e_{200}$, thereby calculating a value of the basis vector $a_{67} e_{67}$.

The dimensional compression unit 150b orthogonally transforms the respective remaining basis vectors $a_1 e_1$ to $a_{130} e_{130}$ and $a_{132} e_{132}$ to $a_{200} e_{200}$ with respect to the basis vector $a_{131} e_{131}$, and integrates the values of the respective orthogonally transformed basis vectors $a_1 e_1$ to $a_{130} e_{130}$ and $a_{132} e_{132}$ to $a_{200} e_{200}$, thereby calculating a value of the basis vector $a_{131} e_{131}$.

The dimensional compression unit 150b sets the respective components of the compressed vector obtained by dimensionally compressing the 200-dimensional vector as a "value of the basis vector $a_1 e_1$, value of the basis vector $a_{67} e_{67}$, and value of the basis vector $a_{131} e_{131}$". As a result, it becomes possible to dimensionally compress the 200-dimensional vector into a three-dimensional vector divided by the prime number "3". Note that the dimensional compression unit 150b may perform dimensional compression using the Karhunen-Loeve (KL) expansion or the like. The dimensional compression unit 150b executes the dimensional compression described above for each word of the word vector table 140a, thereby generating the dimensional compression word vector table 140b.

The generation processing unit 150c receives a plurality of the text files 10A, performs lexical analysis on a character string included in the text file 10A, and divides the character string into word units. The generation processing unit 150c compresses the words included in the plurality of text files 10A in word units on the basis of the dictionary information 15, and generates a plurality of the text compressed files 10B. The generation processing unit 150c compares the words of the text file 10A with the dictionary information 15, and compresses each word into a code. The generation processing unit 150c compresses, among the words of the text file 10A, words that do not exist in the dictionary information 15 while assigning dynamic codes thereto, and registers such words and the dynamic codes in the dynamic dictionary 140g.

Simultaneously with the compression encoding described above, the generation processing unit 150c generates the word index 140c, the synonym index 140d, the synonymous sentence index 140e, and the sentence vector table 140f on the basis of the text file 10A.

An exemplary process of generating the "word index 140c" using the generation processing unit 150c will be described. In a case where the generation processing unit 150c hits predetermined word ID (word code) in the process of scanning and compressing the words of the text file 10A from the beginning, it identifies the offset from the beginning, and sets a flag "1" at the portion of the word index 140c where the identified offset intersects with the word ID. The generation processing unit 150c repeatedly executes the process described above, thereby generating the word index 140c. An initial value of each part of the word index 140c is set to "0".

An exemplary process of generating the "synonym index 140d" using the generation processing unit 150c will be described. In the process of scanning and compressing the words of the text file 10A from the beginning, the generation processing unit 150c obtains a compressed vector corresponding to the word to be compressed from the dimensional compression word vector table 140b. In the following descriptions, the obtained compressed vector will be referred to as a "target compressed vector" as appropriate.

The generation processing unit 150c calculates similarity between the target compressed vector and the compressed vector of each synonym of the synonym index 140d, the compressed vector having a certain particle size, and identifies the compressed vector in which the similarity to the target compressed vector is maximized among the respective compressed vectors of the synonym index 140d. The generation processing unit 150c set a flag "1" at the intersection of the row of the identified compressed vector and the column of the offset of the word of the target compressed vector in the synonym index 140d.

For example, the generation processing unit 150c calculates the similarity of the compressed vectors on the basis of a formula (2). The formula (2) represents a case of calculating the similarity between a vector A and a vector B and evaluating the similarity of the compressed vectors.

$$\text{cosine\_similarity} = \cos(\theta) = \frac{\mathbf{A} \cdot \mathbf{B}}{\|\mathbf{A}\| \|\mathbf{B}\|} \qquad \cdots (2)$$

The generation processing unit 150c repeatedly executes the process described above, thereby generating the synonym index 140d. Note that an initial value of each part of the synonym index 140d is set to "0".

An exemplary process of generating the "synonymous sentence index 140e" using the generation processing unit 150c will be described. In the process of scanning and compressing the words of the text file 10A from the beginning, the generation processing unit 150c obtains, from the dimensional compression word vector table 140b, compressed vectors of respective words (codes) from the beginning word (code) of one sentence to the word (code) at the end of the one sentence, and integrates the respective obtained compressed vectors, thereby calculating a compressed vector of one sentence. Note that the beginning word of the sentence is the first word of the text or the word next to a punctuation mark. The word at the end of the sentence is a word before a punctuation mark. In the following descriptions, the calculated compressed vector of the sentence will be referred to as a "target compressed vector" as appropriate.

The generation processing unit 150c calculates similarity between the target compressed vector and the compressed vector of each synonymous sentence of the synonymous sentence index 140e, the compressed vector having a certain particle size, and identifies the compressed vector in which the similarity to the target compressed vector is maximized among the respective compressed vectors of the synonymous sentence index 140e. The generation processing unit 150c calculates the similarity between the target compressed vector and each compressed vector on the basis of the formula (2). The generation processing unit 150c set a flag "1" at the intersection of the row of the identified compressed vector and the column of the offset of the beginning word of the sentence with respect to the target compressed vector in the same word sentence index 140e.

The generation processing unit 150c repeatedly executes the process described above, thereby generating the synonymous sentence index 140d. Note that an initial value of each part of the synonymous sentence index 140e is set to "0".

Meanwhile, at the time of generating the word index 140c, the synonym index 140d, and the synonymous sentence index 140e, the generation processing unit 150c may not use the formula (2) and it may be associated with the threshold value of each of the basis vectors of the compressed vectors having a certain particle size to reduce the operation amount. Furthermore, each of the respective inverted indexes 140c, 140d, and 140e may be hashed to reduce the information volume.

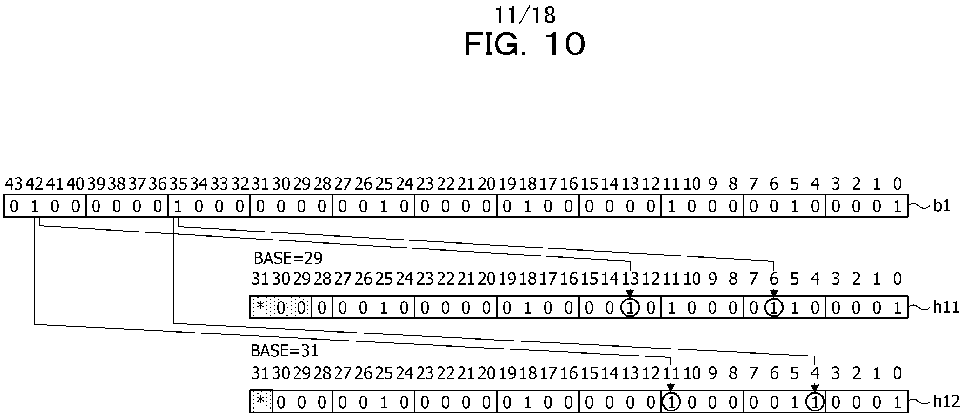

FIG. 10 is a diagram for explaining an exemplary process of hashing an inverted index. In the example explained in FIG. 10, a 32-bit register is assumed, and the bitmap of each row of the word index 140c is hashed on the basis of the prime numbers (bases) of "29" and "31". Here, an exemplary case of generating a hashed bitmap h11 and a hashed bitmap h12 from a bitmap b1 will be described.

The bitmap b1 is assumed to represent a bitmap obtained by extracting a certain row of a word index (e.g., word index 140c illustrated in FIG. 6). The hashed bitmap h11 is a bitmap hashed by the base "29". The hashed bitmap h12 is a bitmap hashed by the base "31".

The generation processing unit 150c associates a remainder value obtained by dividing the position of each bit of the bitmap b1 by one base with the position of the hashed bitmap. In a case where "1" is set at the position of the corresponding bit of the bitmap b1, the generation processing unit 150c performs processing of setting "1" to the associated position of the hashed bitmap.

An exemplary process of generating the hashed bitmap h11 of the base "29" from the bitmap b1 will be described. First, the generation processing unit 150c copies the information associated with the positions "0 to 28" of the bitmap b1 to the hashed bitmap h11. Subsequently, as the remainder obtained by dividing the bit position "35" of the bitmap b1 by the base "29" is "6", the position "35" of the bitmap b1 is associated with the position "6" of the hashed bitmap h11. Since "1" is set at the position "35" of the bitmap b1, the generation processing unit 150c sets "1" at the position "6" of the hashed bitmap h11.

As the remainder obtained by dividing the bit position "42" of the bitmap b1 by the base "29" is "13", the position "42" of the bitmap b1 is associated with the position "13" of the hashed bitmap h11. Since "1" is set at the position "42" of the bitmap b1, the generation processing unit 150c sets "1" at the position "13" of the hashed bitmap h11.

The generation processing unit 150c repeatedly executes the process described above for the position "29" or higher of the bitmap b1, thereby generating the hashed bitmap h11.

An exemplary process of generating the hashed bitmap h12 of the base "31" from the bitmap b1 will be described.

First, the generation processing unit 150c copies the information associated with the positions "0 to 30" of the bitmap b1 to the hashed bitmap h12. Subsequently, as the remainder obtained by dividing the bit position "35" of the bitmap b1 by the base "31" is "4", the position "35" of the bitmap b1 is associated with the position "4" of the hashed bitmap h12. Since "1" is set at the position "35" of the bitmap b1, the generation processing unit 150c sets "1" at the position "4" of the hashed bitmap h12.

As the remainder obtained by dividing the bit position "42" of the bitmap b1 by the base "31" is "11", the position "42" of the bitmap b1 is associated with the position "11" of the hashed bitmap h12. Since "1" is set at the position "42" of the bitmap b1, the generation processing unit 150c sets "1" at the position "11" of the hashed bitmap h12.

The generation processing unit 150c repeatedly executes the process described above for the position "31" or higher of the bitmap b1, thereby generating the hashed bitmap h12.

The generation processing unit 150c performs the compression based on the wrapping technique described above on each row of the word index 140c, thereby hashing the word index 140c. Note that information associated with a row (encoded word type) of the bitmap of the generator is added to the hashed bitmaps of the bases "29" and "31". While the case where the generation processing unit 150c hashes the word index 140c has been described with reference to FIG. 10, the synonym index 140d and the synonymous sentence index 140e are also hashed in a similar manner.

The description returns to FIG. 3. The extraction unit 150d calculates compressed vectors of a plurality of sentences included in the search query 20A. First, the extraction unit 150d obtains, from the dimensional compression word vector table 140b, compressed vectors of a plurality of words included in one sentence, and restores the obtained compressed vectors of the words to 200-dimensional vectors. The compressed vector of the dimensional compression word vector table 140b is a vector having each of the value of the basis vector $a_1e_1$, value of the basis vector $a_{67}e_{67}$, value of the basis vector $a_{133}e_{133}$ as a dimensional value.

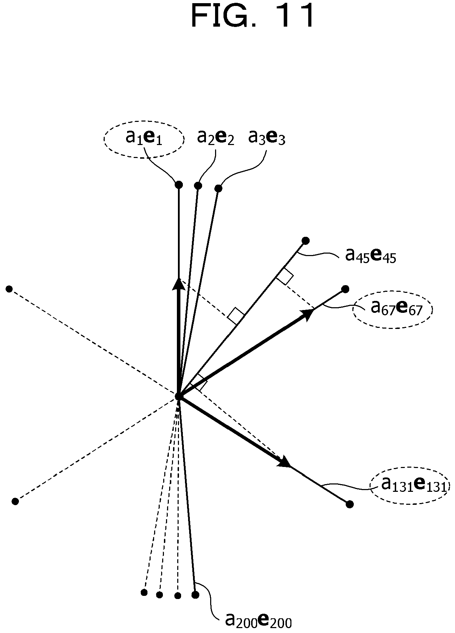

FIG. 11 is a diagram for explaining dimensional restoration. FIG. 11 explains an exemplary case of restoring the value of the basis vector basis vector $a_{45}e_{45}$ on the basis of the basis vector $a_1e_1$, basis vector $a_{67}e_{67}$, and basis vector $a_{131}e_{131}$ divided by the prime number "3". The extraction unit 150d integrates the values obtained by orthogonally transforming the basis vector $a_1e_1$, basis vector $a_{67}e_{67}$, and basis vector $a_{131}e_{131}$ with respect to the basis vector $a_{45}e_{45}$, thereby restoring the value of the basis vector $a_{45}e_{45}$.

The extraction unit 150d also repeatedly executes the process described above for other basis vectors in a similar manner to the basis vector $a_{45}e_{45}$, thereby restoring the three-dimensional compressed vector to the 200-dimensional vector.

Subsequently, the extraction unit 150d integrates, using the dimensional compression word table 140b, vectors of a plurality of words included in one sentence, thereby calculating a vector of the sentence. The extraction unit 150d also similarly calculates a vector of a sentence for other sentences included in the search query 20A. Furthermore, the extraction unit 150d integrates vectors of a plurality of sentences included in the search query 20A, thereby calculating a "query vector" of the search query 20A.

The extraction unit 150d sorts values of respective dimensions of the query vector in descending order, and identifies the upper "feature dimensions". The extraction unit 150d extracts, as the feature sentence 22, a sentence containing a large number of vector values of the feature dimensions from among the plurality of sentences included in the search query 20A. Furthermore, the extraction unit 150d extracts, as the feature word 21, a word containing a large number of vector values of the feature dimensions from among a plurality of words included in the search query 20A. The extraction unit 150d outputs, to the identification unit 150e, information associated with the feature word 21 and information associated with the feature sentence 22.

An identification unit 150e compares a compressed vector of the feature word 21 with a compressed vector of the synonym index 140d to identify a compressed vector of the synonym index 140d having similarity to the compressed vector of the feature word 21 equal to or higher than a threshold value. The identification unit 150e searches the plurality of text compressed files 10B for the text compressed file corresponding to the feature word 21 on the basis of the offset corresponding to the identified compressed vector, and generates the searched text compressed file as a first candidate list 31.

The formula (2) is used when the identification unit 150e calculates the similarity between the compressed vector of the feature word 21 and the compressed vector of the synonym index 140d. Here, the compressed vector of the synonym index 140d having the similarity to the compressed vector of the feature word 21 equal to or higher than the threshold value will be referred to as a "similar compression vector".

In a case where a plurality of the similar compression vectors exists, the identification unit 150e sorts the similar compression vectors in descending order of similarity, and ranks the similar compression vectors in descending order of similarity. In the case of generating the first candidate list 31, the identification unit 150e registers the searched text compressed files in the first candidate list 31 on the basis of the offset corresponding to the similar compression vector having a larger degree of the similarity. The identification unit 150e may register the text compressed files in the first candidate list 31 in the rank order.

The identification unit 150e compares a compressed vector of the feature sentence 22 with a compressed vector of the synonymous sentence index 140e to identify a compressed vector of the synonymous sentence index 140e having similarity to the compressed vector of the feature sentence 22 equal to or higher than the threshold value. The identification unit 150e searches the plurality of text compressed files 10B for the text compressed file corresponding to the feature sentence 22 on the basis of the offset corresponding to the identified compressed vector, and generates the searched text compressed file as a second candidate list 32.

The identification unit 150e decodes each text compressed file 10B registered in the first candidate list 31 on the basis of the dictionary information 15 and the dynamic dictionary 140g, and outputs the decoded first candidate list 31 to the display unit 130 to display it. Furthermore, the identification unit 150e my transmit the decoded first candidate list 31 to the external device that has transmitted the search query 20A.

The formula (2) is used when the identification unit 150e calculates the similarity between the compressed vector of the feature sentence 22 and the compressed vector of the synonymous sentence index 140e. Here, the compressed vector of the synonymous sentence index 140e having the similarity to the compressed vector of the feature sentence 22 equal to or higher than the threshold value will be referred to as a "similar compression vector".

In a case where a plurality of the similar compression vectors exists, the identification unit 150e sorts the similar compression vectors in descending order of similarity, and ranks the similar compression vectors in descending order of similarity. In the case of generating the second candidate list 32, the identification unit 150e registers the searched text compressed files in the second candidate list 32 on the basis of the offset corresponding to the similar compression vector having a larger degree of the similarity. The identification unit 150e may register the text compressed files in the first candidate list 31 in the rank order.

The identification unit 150e decodes each text compressed file 10B registered in the second candidate list 32 on the basis of the dictionary information 15 and the dynamic dictionary 140g, and outputs the decoded second candidate list 32 to the display unit 130 to display it. Furthermore, the identification unit 150e my transmit the decoded second candidate list 32 to the external device that has transmitted the search query 20A.

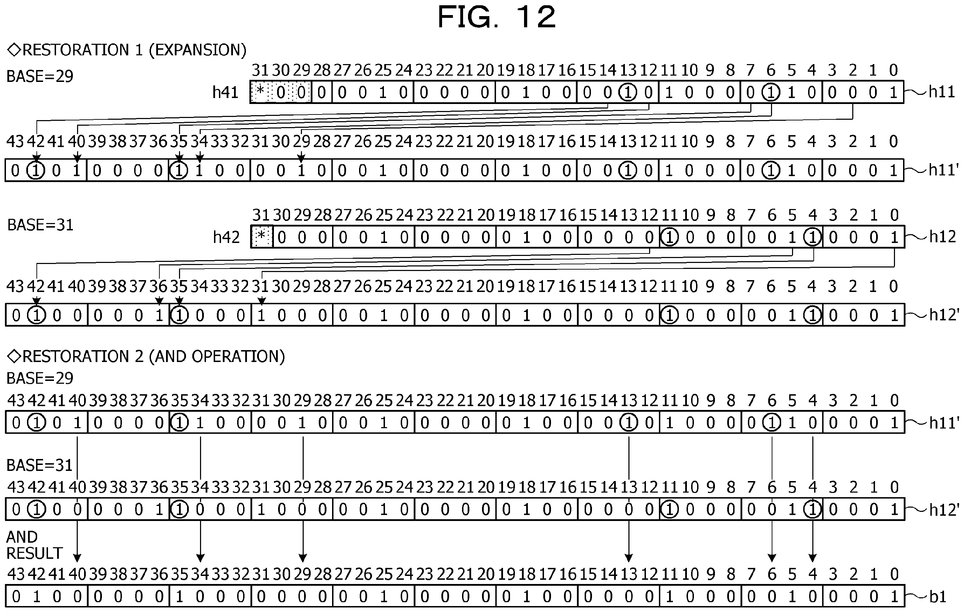

Meanwhile, the identification unit 150e restores the hashed bitmap in a case where the synonym index 140d and the synonymous sentence index 140e are hashed. FIG. 12 is a diagram for explaining a process of restoring a hashed bitmap. Here, an exemplary case where the identification unit 150e restores the bitmap b1 on the basis of the hashed bitmap h11 and the hashed bitmap h12 will be described.

The identification unit 150e generates an intermediate bitmap h11' from the hashed bitmap h11 of the base "29". The identification unit 150e copies the values at the positions 0 to 28 of the hashed bitmap h11 to the positions 0 to 28 of the intermediate bitmap h11', respectively.

For values after the position 29 of the intermediate bitmap h11', the identification unit 150e repeatedly executes the process of copying the respective values of the positions 0 to 28 of the hashed bitmap h11 for each "29". In the example illustrated in FIG. 12, an exemplary case where the values of the positions 0 to 14 of the hashed bitmap h11 are copied to the positions 29 to 43 of the intermediate bitmap h11' is illustrated.

The identification unit 150e generates an intermediate bitmap h12' from the hashed bitmap h12 of the base "31". The identification unit 150e copies the values at the positions 0 to 30 of the hashed bitmap h12 to the positions 0 to 30 of the intermediate bitmap h12', respectively.

For values after the position 31 of the intermediate bitmap h12', the identification unit 150e repeatedly executes the process of copying the respective values of the positions 0 to 30 of the hashed bitmap h12 for each "31". In the example illustrated in FIG. 12, an exemplary case where the values of the positions 0 to 12 of the hashed bitmap h12 are copied to the positions 31 to 43 of the intermediate bitmap h12' is illustrated.

When the identification unit 150e generates the intermediate bitmap h11' and the intermediate bitmap h12', it performs an AND operation on the intermediate bitmap h11' and the intermediate bitmap h12' to restore the bitmap b1 before being hashed. The identification unit 150e may restore each bitmap corresponding to the code of the word (restore the synonym index 140d and the synonymous sentence index 140e) by repeatedly executing a similar process also for other hashed bitmaps.

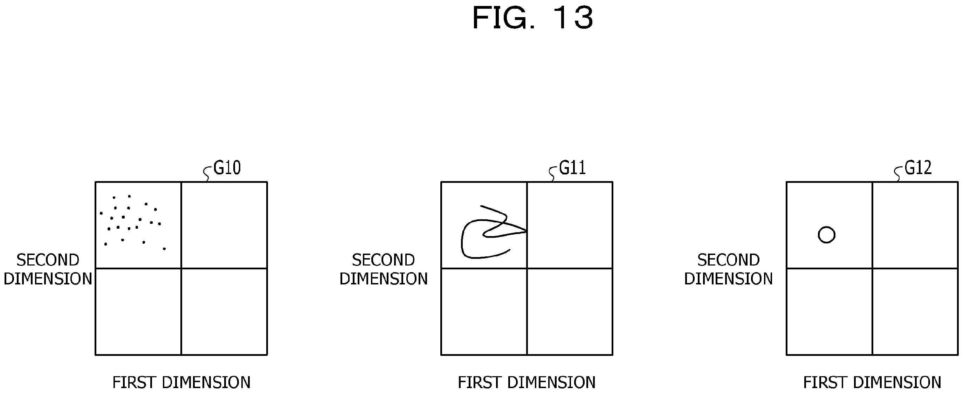

The graph generation unit 150f is a processing unit that generates, upon reception of designation of the text file 10A (or text compressed file 10B) via the input unit 120 or the like, graph information on the basis of the designated text file 10A. FIG. 13 is a diagram illustrating exemplary graph information. A graph G10 illustrated in FIG. 13 is a graph that illustrates positions corresponding to compressed vectors of respective words included in the text file 10A and a distributed state of the words. A graph G11 is a graph that illustrates positions corresponding to compressed vectors of respective sentences included in the text file 10A and a transition state of the sentences. A graph G12 is a graph that illustrates positions corresponding to the compressed vector obtained by summing a plurality of sentence vectors of the text file 10A. The horizontal axes of the graphs G10 to G12 are axes corresponding to a first dimension of the compressed vector, and vertical axes are axes corresponding to a second dimension (dimension different from the first dimension). For example, in the case of graphing a university syllabus (lecture outline), the horizontal axis is set to represent an era or the Christian era, and the vertical axis is set to represent a dimension related to an area or a location. Note that the first dimension and the second dimension are assumed to be set in advance, and the respective values are accumulated

**EP 3 958 147 A1**

and converted from the three-dimensional compressed vectors by orthogonal transformation.

An exemplary process of generating the graph G10 using the graph generation unit 150f will be described. The graph generation unit 150f performs lexical analysis on the character string included in the text file 10A, and sequentially extracts words from the beginning. The graph generation unit 150f compares the dimensional compression word vector table 140b with the extracted word to identify the compressed vector, and repeatedly executes a process of plotting a point at the position of the graph G10 corresponding to the value of the first dimension and the value of the second dimension from the identified compressed vector, thereby generating a graph 10.

An exemplary process of generating the graph G11 using the graph generation unit 150f will be described. The graph generation unit 150f performs lexical analysis on the character string included in the text file 10A, and sequentially extracts sentences from the beginning. The graph generation unit 150f compares each word included in the sentence with the dimensional compression word vector table 140b to identify the compressed vector of the word, and integrates the words contained in the sentence, thereby executing a process of calculating a compressed vector of the sentence for each sentence. The graph generation unit 150f repeatedly executes a process of plotting a point at the position of the graph G11 corresponding to the value of the first dimension and the value of the second dimension for the compressed vector of each sentence, thereby generating the graph 10. The graph generation unit 150f may connect the points of the graph G11 according to the order of appearance of the sentences included in the text file 10A.

An exemplary process of generating the graph G12 using the graph generation unit 150f will be described. The graph generation unit 150f performs lexical analysis on the character string included in the text file 10A, and sequentially extracts sentences from the beginning. The graph generation unit 150f compares each word included in the sentence with the dimensional compression word vector table 140b to identify the compressed vector of the word, and integrates the words contained in the sentence, thereby executing a process of calculating a compressed vector of the sentence for each sentence. Furthermore, the graph generation unit 150f integrates the compressed vectors of respective sentences, thereby calculating a compressed vector of the text file 10A. The graph generation unit 150f plots a point at the position of the graph G11 corresponding to the value of the first dimension and the value of the second dimension for the compressed vector of the text file 10A, thereby generating the graph G12.

Although the case where the graph generation unit 150f separately generates the graphs G10 to G12 has been described above, the graph generation unit 150f may simultaneously generate the graphs G10 to G12. For example, the graph generation unit 150f may perform lexical analysis on the character string contained in the text file 10A, sequentially extract words from the beginning, and calculate, in the process of identifying the compressed vector, the compressed vector of the sentence and the compressed vector of the text file 10A together.

Next, an exemplary processing procedure of the information processing device 100 according to the present embodiment will be described.

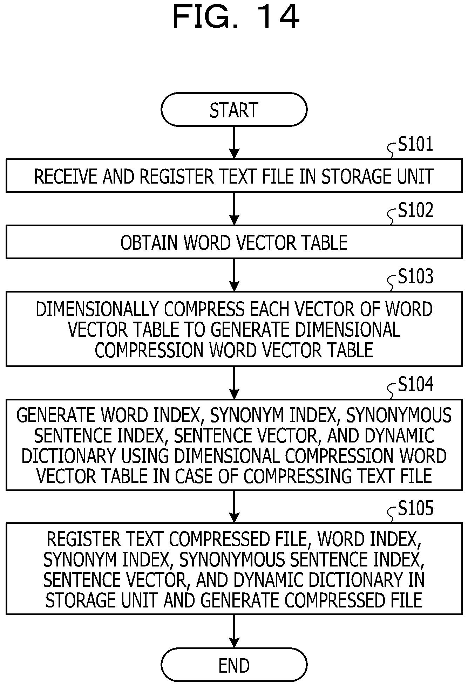

FIG. 14 is a flowchart (1) illustrating a processing procedure of the information processing device according to the present embodiment. The reception unit 150a of the information processing device 100 receives the text file 10A, and registers it in the storage unit 140 (step S101).

The dimensional compression unit 150b of the information processing device 100 obtains the word vector table 140a (step S102). The dimensional compression unit 150b dimensionally compresses each vector of the word vector table, thereby generating the dimensional compression word vector table 140b (step S103).

In the case of compressing the text file 10A, the generation processing unit 150c of the information processing device 100 generates, using the dimensional compression word vector table 140b, the word index 140c, the synonym index 140d, the synonymous sentence index 140e, the sentence vector table 140f, and the dynamic dictionary 140g (step S104).

The generation processing unit 150c registers the word index 140c, the synonym index 140d, the synonymous sentence index 140e, the sentence vector table 140f, and the dynamic dictionary 140g in the storage unit 140, and generates the text compressed file 10B (step S105).

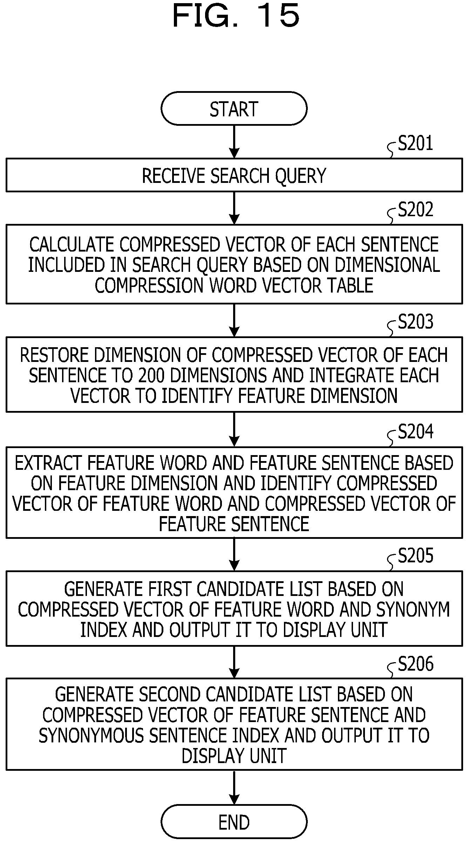

FIG. 15 is a flowchart (2) illustrating a processing procedure of the information processing device according to the present embodiment. The reception unit 150a of the information processing device 100 receives the search query 20A (step S201). The extraction unit 150d of the information processing device 100 calculates a compressed vector of each sentence included in the search query 20A on the basis of the dimensional compression word vector table 140b (step S202).

The extraction unit 150d restores the dimension of the compressed vector of each sentence to 200 dimensions, and identifies the feature dimensions (step S203). The extraction unit 150d extracts the feature word and the feature sentence on the basis of the feature dimensions, and identifies the compressed vector of the feature word and the compressed vector of the feature sentence (step S204).

The identification unit 150e of the information processing device 100 generates the first candidate list 31 on the basis of the compressed vector of the feature word and the synonym index, and outputs it to the display unit 130 (step S205). The identification unit 150e generates the second candidate list 32 on the basis of the compressed vector of the feature sentence and the synonymous sentence index 140e, and outputs it to the display unit 130 (step S206).

Next, effects of the information processing device 100 according to the present embodiment will be described. The information processing device 100 generates the dimensional compression word vector table 140b by dimensionally compressing the word vector table 140a, and generates the synonym index 140d and the synonymous sentence index 140e in the case of compressing the text file 10A. The synonym index 140d is information that assigns the same compressed vector to each word belonging to the same synonym and defines a position at which the word (synonym) corresponding to the compressed vector appears. Furthermore, the synonymous sentence index 140e is information that assigns the same compressed vector to each sentence belonging to the same synonymous sentence and defines a position at which the sentence (synonymous sentence) corresponding to the compressed vector appears. Therefore, it becomes possible to reduce data volume as compared with a conventional method of assigning a 200-dimensional vector to each word.

In a case where the search query 20A is given, the information processing device 100 identifies the feature dimensions of the search query 20A, and identifies the feature word 21 and the feature sentence 22 in which vector values of the feature dimensions are maximized. The information processing device 100 generates the first candidate list 31 on the basis of the compressed vector of the feature word 21 and the synonym index 140d. The information processing device 100 generates the second candidate list 32 on the basis of the compressed vector of the feature sentence 22 and the synonymous sentence index 140e. Since the compressed vectors to be used in the feature word 21, the feature sentence 22, the synonym index 140d, and the synonymous sentence index 140e are three-dimensional vectors, it becomes possible to detect the text compressed file 10B containing words and sentences similar to the search query 20A while suppressing the cost of similarity calculation.

The information processing device 100 generates and displays the graph G10 based on the compressed vectors of a plurality of words contained in the text file 10A, the graph G11 based on the compressed vectors of a plurality of sentences, and the graph G12 based on the compressed vector of the text file 10A. This makes it possible to visualize words, sentences, and text files (text).

Meanwhile, while the information processing device 100 according to the present embodiment uses one synonym index 140d to detect the text compressed file 10B containing the feature word extracted from the search query 20A and generates the first candidate list 31, it is not limited thereto. The information processing device 100 may generate a plurality of synonym indexes 140d having different particle sizes (different classification levels), and may generate the first candidate list 31 using the plurality of synonym indexes 140d.

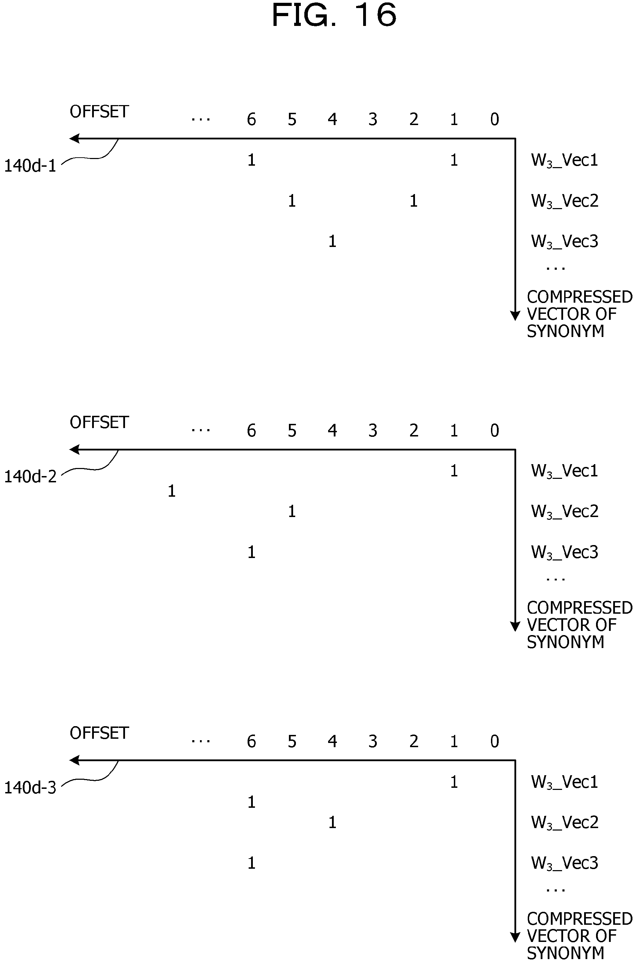

FIG. 16 is a diagram illustrating an example of a plurality of synonym indexes generated by the generation processing unit. FIG. 16 explains a case of generating three synonym indexes 140d-1, 140d-2, and 140d-3 as an example. A first reference value, a second reference value, and a third reference value are set to the synonym indexes 140d-1, 140d-2, and 140d-3, respectively. The magnitude relationship of the respective reference values is set to be the first reference value < the second reference value < the third reference value. The particle size of the synonym index 140d-1 is the smallest, and the particle size increases in the order of the synonym index 140d-2 and the synonym index 140d-3.

In the process of scanning and compressing the words of the text file 10A from the beginning, the generation processing unit 150c repeatedly executes a process of obtaining the compressed vector corresponding to the word to be compressed from the dimensional compression word vector table 140b.

The generation processing unit 150c calculates the similarity of respective compressed vectors, and determines a group of the compressed vectors having the similarity equal to or higher than the first reference value as a synonym. The generation processing unit 150c identifies the average value of a plurality of compressed vectors included in the same group as a representative value of the plurality of compressed vectors included in the same group, and sets a flag "1" in the synonym index 140d-1 on the basis of the representative value (compressed vector) and the offset of the word corresponding to the compressed vector. The generation processing unit 150c repeatedly executes the process described above for each group, thereby setting each flag in the synonym index 140d-1.

The generation processing unit 150c calculates the similarity of respective compressed vectors, and determines a group of the compressed vectors having the similarity equal to or higher than the second reference value as a synonym. The generation processing unit 150c identifies the average value of a plurality of compressed vectors included in the same group as a representative value of the plurality of compressed vectors included in the same group, and sets a flag "1" in the synonym index 140d-2 on the basis of the representative value (compressed vector) and the offset of the word corresponding to the compressed vector. The generation processing unit 150c repeatedly executes the process described above for each group, thereby setting each flag in the synonym index 140d-2.

The generation processing unit 150c calculates the similarity of respective compressed vectors, and determines a group of the compressed vectors having the similarity equal to or higher than the third reference value as a synonym. The generation processing unit 150c identifies the average value of a plurality of compressed vectors included in the same group as a representative value of the plurality of compressed vectors included in the same group, and sets a flag "1" in the synonym index 140d-3 on the basis of the representative value (compressed vector) and the offset of the word corresponding to the compressed vector. The generation processing unit 150c repeatedly executes the process described above for each group, thereby setting each flag in the synonym index 140d-3.

The identification unit 150e compares the compressed vector of the feature word 21 extracted by the extraction unit 150d with the synonym indexes 140d-1 to 140d-3, and identifies the compressed vector in which the similarity to the compressed vector of the feature word 21 is equal to or higher than a threshold value from the synonym indexes 140d-1 to 140d-3.

On the basis of the offset of the compressed vector of the synonym index 140d-1 in which the similarity to the compressed vector of the feature word 21 is equal to or higher than the threshold value, the identification unit 150e searches for a plurality of text compressed files (first text compressed files) corresponding to the offset. On the basis of the offset of the compressed vector of the synonym index 140d-2 in which the similarity to the compressed vector of the feature word 21 is equal to or higher than the threshold value, the identification unit 150e searches for a plurality of text compressed files (second text compressed files) corresponding to the offset. On the basis of the offset of the compressed vector of the synonym index 140d-3 in which the similarity to the compressed vector of the feature word 21 is equal to or higher than the threshold value, the identification unit 150e searches for a plurality of text compressed files (third text compressed files) corresponding to the offset.

The identification unit 150e may register the first to third text compressed files in the first candidate list 31, or may register, among the first to third text compressed files, the text compressed file having been detected the largest number of times in the first candidate list 31.

Furthermore, the identification unit 150e first searches for the text compressed file using the synonym index 140d-3 having the largest particle size, and in a case where the number of the searched text compressed files is less than a predetermined number, it may search for the text compressed file after performing switching to the synonym index 140d-2 having the next largest particle size. Furthermore, the identification unit 150e searches for the text compressed file using the synonym index 140d-2, and in a case where the number of the searched text compressed files is less than a predetermined number, it may search for the text compressed file after performing switching to the synonym index 140d-1 having the next largest particle size. With the synonym index being switched in this manner, it becomes possible to adjust the number of candidates of the search result.

While the example described above has explained the case of setting the first reference value, the second reference value, and the third reference value for the synonym index 140d and generating the synonym indexes 140d-1 to 140d-3 having different particle sizes, it is not limited thereto. The generation processing unit 150c may set the first reference value, the second reference value, and the third reference value for the synonymous sentence index 140e, and may generate respective synonymous sentence indexes having different particle sizes. Furthermore, the user may operate the input unit 120 or the like to change the first reference value, the second reference value, and the third reference value as appropriate. In a case where a change of the first reference value, the second reference value, or the third reference value is received, the generation unit 150c may dynamically recreate each of the synonym index 140d and the synonymous sentence index 140e having different particle sizes.

While the dimensional compression unit 150b according to the present first embodiment has obtained one compressed vector for one word by calculating each of the values the basis vectors of the number "1" and the two prime numbers "67" and "131" divided by the prime number "3", it is not limited thereto. For example, in the case of calculating a compressed vector, the dimensional compression unit 150b may set basis vectors of a plurality of prime numbers divided by a plurality of types of prime numbers, and may calculate a plurality of types of compressed vectors for one word. For example, the dimensional compression unit 150b may calculate basis vectors of the number "1" and the two prime numbers "67" and "131" divided by the prime number "3", basis vectors of the number "1" and the four prime numbers "41", "79", "127", and "163" divided by the prime number "5", and basis vectors of the number "1" and the six prime numbers "29", "59", "83", "113", "139", and "173" divided by the prime number "7", and may register, in the dimensional compression word vector table 140b, a plurality of types of compressed vectors for one word. Then, in a case where the generation processing unit 150d and the extraction processing unit 150d use the dimensional compression word vector table 140b, any of the compressed vectors may be selectively used to generate an inverted index and to extract a feature word and a feature sentence.

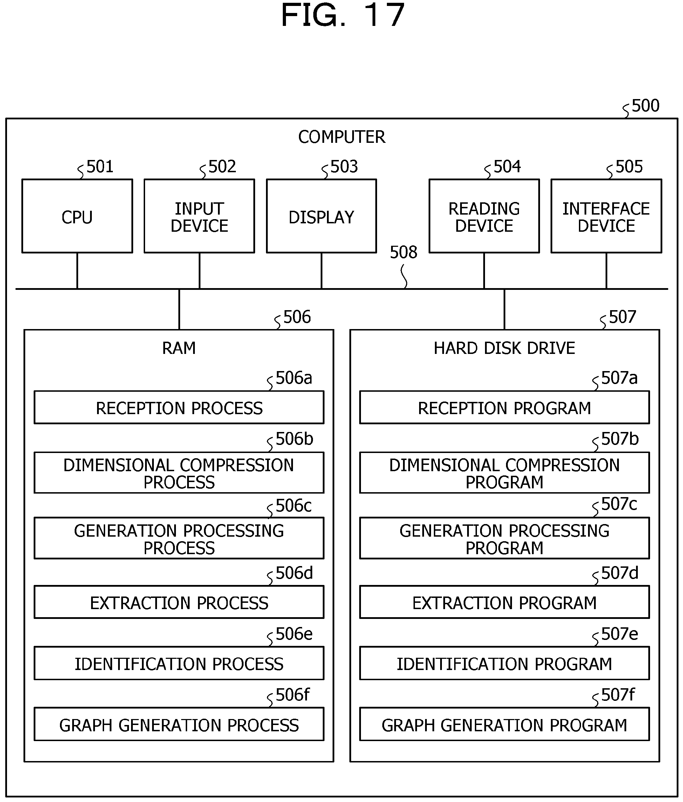

Next, an exemplary hardware configuration of a computer that implements functions similar to those of the information processing device 100 described in the present embodiment will be described. FIG. 17 is a diagram illustrating an exemplary hardware configuration of a computer that implements functions similar to the information processing device according to the present embodiment.

As illustrated in FIG. 17, a computer 500 includes a CPU 501 that executes various kinds of calculation processing, an input device 502 that receives data input from a user, and a display 503. Furthermore, the computer 500 includes a reading device 504 that reads a program and the like from a storage medium, and an interface device 505 that exchanges data with an external device and the like via a wired or wireless network. The computer 500 includes a RAM 506 that temporarily stores various types of information, and a hard disk drive 507. In addition, each of the devices 501 to 507 is connected to a bus 508.

The hard disk drive 507 has a reception program 507a, a dimensional compression program 507b, a generation processing program 507c, an extraction program 507d, an identification program 507e, and a graph generation program 507f. The CPU 501 reads the reception program 507a, dimensional compression program 507b, generation processing program 507c, extraction program 507d, identification program 507e, and graph generation program 507f, and loads them in the RAM 506.

The reception program 507a functions as a reception process 506a. The dimensional compression program 507b functions as a dimensional compression process 506b. The generation processing program 507c functions as a generation processing process 506c. The extraction program 507d functions as an extraction process 506d. The identification program 507e functions as an identification process 506e. The graph generation program 507f functions as a graph generation process 506f.

Processing of the reception process 506a corresponds to the processing of the reception unit 150a. Processing of the dimensional compression process 506b corresponds to the processing of the dimensional compression unit 150b. Processing of the generation processing process 506c corresponds to the processing of the generation processing unit 550c. Processing of the extraction process 506d corresponds to the processing of the extraction unit 150d. Processing of the identification process 506e corresponds to the processing of the identification unit 150e. Processing of the graph generation process 506f corresponds to the processing of the graph generation unit 150f.

Note that each of the programs 507a to 507f is not necessarily stored in the hard disk drive 507 beforehand. For example, each of the programs may be stored in a "portable physical medium" such as a flexible disk (FD), a compact disc (CD)-ROM, a digital versatile disk (DVD), a magneto-optical disk, or an integrated circuit (IC) card to be inserted into the computer 500. Then, the computer 500 may read and execute each of the programs 507a to 507f.

[REFERENCE SIGNS LIST]

10A text file
10B text compressed file
15 dictionary information
20A search query
31 first candidate list
32 second candidate list
100 information processing device
110 communication unit
120 input unit
130 display unit
140 storage unit
140a word vector table
140b dimensional compression word vector table
140c word index
140d synonym index
140e synonymous sentence index
140f sentence vector table
140g dynamic dictionary
150 control unit
150a reception unit
150b dimensional compression unit
150c generation processing unit
150d extraction unit
150e identification unit
150f graph generation unit

[CITATION LIST]

[PATENT DOCUMENT]

Examples of the related art include as follows:

Japanese Laid-open Patent Publication No. 2006-119714; Japanese Laid-open Patent Publication No. 2018-180789; Japanese Laid-open Patent Publication No. 2006-146355; and Japanese Laid-open Patent Publication No. 2002-230021.

[NON-PATENT DOCUMENT]

Examples of the related art include as follows:

IWASAKI Masajiro, "Publication of NGT that realizes high-speed neighborhood search in high-dimensional vector data*",*
<https://techblog.yahoo.co.jp/lab/searchlab/ngt-1.0.0/>, searched on March 12, 2019

**Claims**

1. An identification method causing a computer to perform a process comprising:

   receiving text included in a search condition;
   identifying a vector that corresponds to any word included in the received text; and
   by using reference to a storage device configured to store, in association with each of a plurality of vectors that correspond to a plurality of words included in at least one of a plurality of text files, presence information that indicates whether or not a word that corresponds to the each of the plurality of vectors is included in each of the plurality of text files,
   identifying, from among the plurality of text files, a text file that includes the any word on the basis of the presence information associated with a vector in which similarity to the identified vector is equal to or higher than a standard among the plurality of vectors.

2. The identification method according to claim 1, wherein the identifying a vector integrates a value of each dimension of the word included in the text and identifies a vector of a feature word from the any word included in the text on the basis of an integration result, and the identifying a text file refers to the storage unit and identifies a text file that includes the any word among the plurality of text files on the basis of presence information associated with a vector in which similarity to the vector of the feature word is equal to or higher than a standard among the plurality of vectors.

3. The identification method according to claim 1, wherein the identifying a vector identifies a vector of a feature sentence from any sentence included in the search condition on the basis of an integration result obtained by integrating a value of each dimension of a plurality of sentences included in the search condition, and the identifying a text file refers to the storage unit that stores presence information that indicates whether or not a sentence that corresponds to each of the plurality of vectors is included in each of the plurality of text files and identifies a text file that includes the any sentence included in the search condition among the plurality of text files on the basis of presence information associated with a vector in which similarity to the vector of the feature sentence is equal to or higher than a standard among the plurality of vectors.

4. A generation method causing a computer to perform a process comprising:

   receiving a text file;
   identifying a first vector that corresponds to any word included in the received text file;
   identifying, with reference to a storage unit that stores a plurality of vectors that corresponds to a plurality of words, a second vector in which similarity to the first vector is equal to or higher than a standard; and
   generating information that associates information that indicates that the text file includes the any word with the second vector.

5. The generation method according to claim 4, further comprising:

   associating, for each different classification level, each word that belongs to a word group in which similarity between vectors is equal to or higher than a reference value among a plurality of words included in the text file with a same vector on the basis of a plurality of reference values of similarity according to a classification level; and
   generating, for each different classification level, an inverted index in which an offset of a word that belongs to a certain word group included in the text file is associated with a vector of the word that belongs to the certain word group.

6. The generation method according to claim 5, further comprising:

receiving text included in a search condition;

identifying a vector that corresponds to any word included in the received text; and

identifying a text file that includes the word that corresponds to the vector on the basis of the identified vector and any of the inverted indexes for each classification level.

7. The generation method according to claim 6, wherein the identifying the text file switches the inverted index on the basis of a number of text files searched on the basis of the inverted index for each classification level.

8. A dimensional compression method causing a computer to perform a process comprising:

on the basis of a vector of a plurality of dimensions that corresponds to a character string, distributing and arranging, in a circle, a plurality of basis vectors in which the vector is component-decomposed for each dimension;

calculating a value of a first basis vector by integrating a value obtained by orthogonally transforming another second basis vector that excludes the first basis vector with respect to the first basis vector among the plurality of basis vectors; and

compressing the plurality of dimensions included in the vector into a dimension that corresponds to the first basis vector and setting a compressed dimension value as a value of the first basis vector calculated by the calculating.

9. A display method causing a computer to perform a process comprising:

receiving text;

dimensionally compressing dimensions of vectors that correspond to a plurality of words or sentences included in the received text;

generating image information in which, among the dimensionally compressed dimensions of the vectors that correspond to the plurality of words or sentences, each position that corresponds to a value of a two-dimensional vector is plotted in a graph; and

displaying the generated image information.

10. An information processing device comprising:

a reception unit that receives text included in a search condition; and

an identification unit that identifies a vector that corresponds to any word included in the received text, and with reference to a storage unit that stores, in association with each of a plurality of vectors that corresponds to a plurality of words included in at least one of a plurality of text files, presence information that indicates whether or not a word that corresponds to each of the plurality of vectors is included in each of the plurality of text files, identifies a text file that includes the any word among the plurality of text files on the basis of presence information associated with a vector in which similarity to the identified vector is equal to or higher than a standard among the plurality of vectors.

11. An information processing device comprising:

a reception unit that receives a text file; and

a generation processing unit that identifies a first vector that corresponds to any word included in the received text file, identifies, with reference to a storage unit that stores a plurality of vectors that corresponds to a plurality of words, a second vector in which similarity to the first vector is equal to or higher than a standard, and generates information that associates information that indicates that the text file includes the any word with the second vector.

12. An information processing device comprising:

a reception unit that receives text; and

a graph generation unit that dimensionally compresses dimensions of vectors that corresponds to a plurality of words or sentences included in the received text, generates image information in which, among the dimensionally compressed dimensions of the vectors that correspond to the plurality of words or sentences, each position that corresponds to a value of a two-dimensional vector is plotted in a graph, and displays the generated image information.

# FIG. 1

WORD VECTOR TABLE ⌐140a

→

DIMENSIONAL COMPRESSION UNIT ⌐150b

→

DIMENSIONAL COMPRESSION WORD VECTOR TABLE ⌐140b

DIMENSIONAL COMPRESSION WORD VECTOR TABLE ⌐140b

TEXT FILE ⌐10A

→

GENERATION PROCESSING UNIT ⌐150c

DICTIONARY INFORMATION ⌐15

→

TEXT COMPRESSED FILE ⌐10B

WORD INDEX ~140c

SYNONYM INDEX ~140d

SYNONYMOUS SENTENCE INDEX ~140e

SENTENCE VECTOR TABLE ~140f

DYNAMIC DICTIONARY ~140g

EP 3 958 147 A1

# FIG. 2

SEARCH QUERY `20A`

DIMENSIONAL COMPRESSION WORD VECTOR TABLE `140b`

EXTRACTION UNIT `150d`

FEATURE WORD `21`

FEATURE SENTENCE `22`

FEATURE WORD `21`

FEATURE SENTENCE `22`

TEXT COMPRESSED FILE `10B`

IDENTIFICATION UNIT `150e`

SYNONYM INDEX `140d`

SYNONYMOUS SENTENCE INDEX `140e`

FIRST CANDIDATE LIST `31`

SECOND CANDIDATE LIST `32`

EP 3 958 147 A1

# FIG. 3

**┌100**

INFORMATION PROCESSING DEVICE

**┌150**

### CONTROL UNIT

**┌140**

### STORAGE UNIT

| | |
|---|---|
| **┌110**<br>COMMUNICATION UNIT | **┌150a**<br>RECEPTION UNIT |
| **┌120**<br>INPUT UNIT | **┌150b**<br>DIMENSIONAL COMPRESSION UNIT |
| **┌130**<br>DISPLAY UNIT | **┌150c**<br>GENERATION PROCESSING UNIT |

**┌150d**
EXTRACTION UNIT

**┌150e**
IDENTIFICATION UNIT

**┌150f**
GRAPH GENERATION UNIT

**┌10A**
TEXT FILE

**┌10B**
TEXT COMPRESSED FILE

**┌140a**
WORD VECTOR TABLE

**┌140b**
DIMENSIONAL COMPRESSION WORD VECTOR TABLE

**┌140c**
WORD INDEX

**┌140d**
SYNONYM INDEX

**┌140e**
SYNONYMOUS SENTENCE INDEX

**┌140f**
SENTENCE VECTOR TABLE

**┌15**
DICTIONARY INFORMATION

**┌140g**
DYNAMIC DICTIONARY

**┌20A**
SEARCH QUERY

**┌31**
FIRST CANDIDATE LIST

**┌32**
SECOND CANDIDATE LIST

# FIG. 4

140a

| WORD ID (CODE) | VECTOR (200 DIMENSIONS) |
|:---:|:---:|
| A01 | $Vec_1 1\ Vec_2 1\ Vec_3 1 \cdots Vec_{200} 1$ |
| A02 | $Vec_1 2\ Vec_2 2\ Vec_3 2 \cdots Vec_{200} 2$ |
| A03 | $Vec_1 3\ Vec_2 3\ Vec_3 3 \cdots Vec_{200} 3$ |
| ... | ... |

# FIG. 5

140b

| WORD ID (CODE) | COMPRESSED VECTOR (THREE DIMENSIONS) |
|---|---|
| A01 | $Vec_1 1$ $Vec_2 1$ $Vec_3 1$ |
| A02 | $Vec_1 2$ $Vec_2 2$ $Vec_3 2$ |
| A03 | $Vec_1 3$ $Vec_2 3$ $Vec_3 3$ |
| … | … |

# FIG. 6

# FIG. 7

| OFFSET | ... | 6 | 5 | 4 | 3 | 2 | 1 | 0 | |
|---|---|---|---|---|---|---|---|---|---|
| | | 1 | | | | | 1 | | $W_3\_Vec1$ |
| | | | 1 | | | 1 | | | $W_3\_Vec2$ |
| | | | | 1 | | | | | $W_3\_Vec3$ |
| | | | | | | | | | ... |

140d

...

COMPRESSED VECTOR OF SYNONYM

# FIG. 8

| OFFSET | 30 | ⋯ | 20 | ⋯ | 11 | 10 | ⋯ | 3 | 2 | 1 | 0 | |
|--------|----|----|----|----|----|----|----|----|----|----|----|----|
| 140e   | 1  |    |    |    |    |    |    | 1  |    |    |    | $S_3\_Vec1$ |
|        |    |    |    |    | 1  |    |    |    |    |    |    | $S_3\_Vec2$ |
|        |    |    | 1  |    |    |    |    |    |    |    |    | $S_3\_Vec3$ |
|        |    |    |    |    |    |    |    |    |    |    |    | ⋯ |
|        |    |    |    | ⋯  |    |    |    |    |    |    |    | |

COMPRESSED VECTOR OF SYNONYMOUS SENTENCE

# FIG. 9A

# FIG. 9B

# FIG. 10

EP 3 958 147 A1

43 42 41 40 39 38 37 36 35 34 33 32 31 30 29 28 27 26 25 24 23 22 21 20 19 18 17 16 15 14 13 12 11 10 9 8 7 6 5 4 3 2 1 0

| 0 1 0 0 | 0 0 0 0 | 1 0 0 0 | 0 0 0 0 | 0 0 1 0 | 0 0 0 0 | 0 1 0 0 | 0 0 0 0 | 1 0 0 0 | 0 0 1 0 | 0 0 0 1 | ~b1

BASE=29

31 30 29 28 27 26 25 24 23 22 21 20 19 18 17 16 15 14 13 12 11 10 9 8 7 6 5 4 3 2 1 0

| * 0 0 | 0 0 0 1 0 | 0 0 0 0 | 0 1 0 0 | 0 0 ① 0 | 1 0 0 0 | 0 ① 1 0 | 0 0 0 1 | ~h11

BASE=31

31 30 29 28 27 26 25 24 23 22 21 20 19 18 17 16 15 14 13 12 11 10 9 8 7 6 5 4 3 2 1 0

| * 0 0 0 | 0 0 1 0 | 0 0 0 0 | 0 1 0 0 | 0 0 0 0 | ① 0 0 0 | 0 0 1 ① | 0 0 0 1 | ~h12

# FIG. 11

$a_1\mathbf{e}_1$   $a_2\mathbf{e}_2$   $a_3\mathbf{e}_3$

$a_{45}\mathbf{e}_{45}$

$a_{67}\mathbf{e}_{67}$

$a_{131}\mathbf{e}_{131}$

$a_{200}\mathbf{e}_{200}$

FIG. 12

EP 3 958 147 A1

# FIG. 13

SECOND DIMENSION — G10 — FIRST DIMENSION

SECOND DIMENSION — G11 — FIRST DIMENSION

SECOND DIMENSION — G12 — FIRST DIMENSION

EP 3 958 147 A1

# FIG. 14

START

S101

RECEIVE AND REGISTER TEXT FILE IN STORAGE UNIT

S102

OBTAIN WORD VECTOR TABLE

S103

DIMENSIONALLY COMPRESS EACH VECTOR OF WORD VECTOR TABLE TO GENERATE DIMENSIONAL COMPRESSION WORD VECTOR TABLE

S104

GENERATE WORD INDEX, SYNONYM INDEX, SYNONYMOUS SENTENCE INDEX, SENTENCE VECTOR, AND DYNAMIC DICTIONARY USING DIMENSIONAL COMPRESSION WORD VECTOR TABLE IN CASE OF COMPRESSING TEXT FILE

S105

REGISTER TEXT COMPRESSED FILE, WORD INDEX, SYNONYM INDEX, SYNONYMOUS SENTENCE INDEX, SENTENCE VECTOR, AND DYNAMIC DICTIONARY IN STORAGE UNIT AND GENERATE COMPRESSED FILE

END

# FIG. 15

START

$\downarrow$ ⟋S201

RECEIVE SEARCH QUERY

$\downarrow$ ⟋S202

CALCULATE COMPRESSED VECTOR OF EACH SENTENCE INCLUDED IN SEARCH QUERY BASED ON DIMENSIONAL COMPRESSION WORD VECTOR TABLE

$\downarrow$ ⟋S203

RESTORE DIMENSION OF COMPRESSED VECTOR OF EACH SENTENCE TO 200 DIMENSIONS AND INTEGRATE EACH VECTOR TO IDENTIFY FEATURE DIMENSION

$\downarrow$ ⟋S204

EXTRACT FEATURE WORD AND FEATURE SENTENCE BASED ON FEATURE DIMENSION AND IDENTIFY COMPRESSED VECTOR OF FEATURE WORD AND COMPRESSED VECTOR OF FEATURE SENTENCE

$\downarrow$ ⟋S205

GENERATE FIRST CANDIDATE LIST BASED ON COMPRESSED VECTOR OF FEATURE WORD AND SYNONYM INDEX AND OUTPUT IT TO DISPLAY UNIT

$\downarrow$ ⟋S206

GENERATE SECOND CANDIDATE LIST BASED ON COMPRESSED VECTOR OF FEATURE SENTENCE AND SYNONYMOUS SENTENCE INDEX AND OUTPUT IT TO DISPLAY UNIT

$\downarrow$

END

# FIG. 16

OFFSET     ...    6   5   4   3   2   1   0

| | ... | 6 | 5 | 4 | 3 | 2 | 1 | 0 | |
|---|---|---|---|---|---|---|---|---|---|
| 140d-1 | | 1 | | | | | 1 | | W₃_Vec1 |
| | | | 1 | | | 1 | | | W₃_Vec2 |
| | | | | 1 | | | | | W₃_Vec3 |

W₃_Vec1
W₃_Vec2
W₃_Vec3
...
COMPRESSED VECTOR OF SYNONYM

OFFSET     ...    6   5   4   3   2   1   0

| | ... | 6 | 5 | 4 | 3 | 2 | 1 | 0 | |
|---|---|---|---|---|---|---|---|---|---|
| 140d-2 | | | | | | | 1 | | W₃_Vec1 |
| | 1 | | | | | | | | W₃_Vec2 |
| | | | 1 | | | | | | W₃_Vec3 |
| | | 1 | | | | | | | |

COMPRESSED VECTOR OF SYNONYM

OFFSET     ...    6   5   4   3   2   1   0

| | ... | 6 | 5 | 4 | 3 | 2 | 1 | 0 | |
|---|---|---|---|---|---|---|---|---|---|
| 140d-3 | | | | | | | 1 | | W₃_Vec1 |
| | | 1 | | | | | | | |
| | | | | 1 | | | | | W₃_Vec2 |
| | | 1 | | | | | | | W₃_Vec3 |

COMPRESSED VECTOR OF SYNONYM

# FIG. 17

COMPUTER 500

| 501 | 502 | 503 | 504 | 505 |
|---|---|---|---|---|
| CPU | INPUT DEVICE | DISPLAY | READING DEVICE | INTERFACE DEVICE |

508

**RAM** 506

| RECEPTION PROCESS | 506a |
| DIMENSIONAL COMPRESSION PROCESS | 506b |
| GENERATION PROCESSING PROCESS | 506c |
| EXTRACTION PROCESS | 506d |
| IDENTIFICATION PROCESS | 506e |
| GRAPH GENERATION PROCESS | 506f |

**HARD DISK DRIVE** 507

| RECEPTION PROGRAM | 507a |
| DIMENSIONAL COMPRESSION PROGRAM | 507b |
| GENERATION PROCESSING PROGRAM | 507c |
| EXTRACTION PROGRAM | 507d |
| IDENTIFICATION PROGRAM | 507e |
| GRAPH GENERATION PROGRAM | 507f |

## INTERNATIONAL SEARCH REPORT

| International application No. |
| --- |
| PCT/JP2019/016847 |

### A. CLASSIFICATION OF SUBJECT MATTER
Int. Cl. G06F16/383(2019.01)i

According to International Patent Classification (IPC) or to both national classification and IPC

### B. FIELDS SEARCHED

Minimum documentation searched (classification system followed by classification symbols)
Int. Cl. G06F16/383

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2000-207404 A (SUMITOMO METAL INDUSTRIES, LTD.) 28 July 2000, paragraphs [0033]-[0054], fig. 8 (Family: none) | 1, 4, 10-11<br>2-3, 5-8 |
| Y<br>A | WO 2018/190128 A1 (SONY CORP.) 18 October 2018, paragraphs [0064], [0065] & KR 10-2018-0008235 A | 1, 4, 10-11<br>2-3, 5-8 |
| A | WO 2015/151162 A1 (RAKUTEN, INC.) 08 October 2015, paragraphs [0024]-[0048] & US 2016/0085783 A1 | 5-8 |
| X<br>A | JP 2019-3387 A (KDDI CORP.) 10 January 2019, paragraph [0041], fig. 1 (Family: none) | 9, 12<br>8 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03.07.2019 | 16.07.2019 |

| Name and mailing address of the ISA/<br>　　Japan Patent Office<br>　　3-4-3, Kasumigaseki, Chiyoda-ku,<br>　　Tokyo 100-8915, Japan | Authorized officer<br><br><br>Telephone No. |
| --- | --- |

Form PCT/ISA/210 (second sheet) (January 2015)

<div style="text-align:center">**INTERNATIONAL SEARCH REPORT**</div>

| International application No. |
|---|
| PCT/JP2019/016847 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

[see extra sheet]

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2019/016847 |

(Continuation of Box No. III)

The claims of the present application include three inventions.

Invention 1: Claims 1-7 and 10-11

The special technical feature of the invention in claim 1 is considered to be identifying a word from a text, identifying a vector resembling the vector corresponding to the word from vectors corresponding to the word included in a plurality of texts, and identifying a text including the word corresponding to the identified vector on the basis of the presence or absence of the word.

Claims 2 and 3 are dependent claims including the entire configuration of claim 1.

The invention as in claims 4, 10, and 11 is considered to be substantially the same as the invention in claim 1.

Claims 5-7 are dependent claims comprising the entire configuration of claim 4.

Accordingly, the invention as in claims 1-7 and 10-11 is recognized as being the main invention.

Invention 2: Claim 8

Claim 8 is an independent claim mainly setting forth a method for dimensionally compressing exclusively one vector, and does not include the configuration of the main invention, and also cannot be said to be substantially the same.

Invention 3: Claims 9 and 12

Claims 9 and 12 are independent claims mainly setting forth a method of visual representation of vectors corresponding to exclusively one or a plurality of words or sentences, and does not include the configurations of the main invention or invention 2, and also cannot be said to be substantially the same.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006119714 A
- JP 2018180789 A
- JP 2006146355 A
- JP 2002230021 A

**Non-patent literature cited in the description**

- **IWASAKI MASAJIRO.** *Publication of NGT that realizes high-speed neighborhood search in high-dimensional vector data,* 12 March 2019, https://tech-blog.yahoo.co.jp/lab/searchlab/ngt-1.0.0/